# EUROPEAN PATENT APPLICATION

(11) **EP 4 715 553 A1**
(43) Date of publication of application: **25.03.2026**
(21) Application number: 24799908.9
(22) Date of filing: 26.06.2024
(51) Int. Cl.: G06F 3/04847

(54) **INTERACTIVE PHOTOVOLTAIC INFORMATION PROCESSING SYSTEM AND METHOD**

(30) Priority: 30.04.2023 CN 202310482398; 29.04.2024 CN 202410536992; 29.04.2024 CN 202410537016
(71) Applicant: Shanghai Sigeyuan Intelligent Technology Co., Ltd., Shanghai 200000 (CN)
(72) Inventor: WU, Yanchang, Shanghai 200000 (CN); JIANG, Chao, Shanghai 200000 (CN); PENG, Yu, Shanghai 200000 (CN); HONG, Jingjing, Shanghai 200000 (CN); LU, Wang, Shanghai 200000 (CN)
(74) Representative: Bayramoglu et al.
(86) International application number: PCT/CN2024/101762
(87) International publication number: WO 2024/227452

(57) **Abstract**

Provided are an interactive photovoltaic (PV) information processing system and method, which simplify user input. A user inputs an instruction indicating a working requirement through voice or text, and an analysis and management unit analyzes the input instruction to generate an output instruction. According to the output instruction, a control parameter is generated to specifically configure a parameter of a device side. Alternatively, a working parameter or a control parameter is displayed in chart form on an application (APP) terminal. This reduces the technical threshold for the user of the system, enhances user experience, and enables better management of a PV power station. A large language model (LLM) is innovatively incorporated, which includes an input side for receiving a comprehensive input instruction in text form and an output side for providing the output instruction based on natural language. The entire process is implemented based on natural language, which aligns with user needs. In addition, the processing enables convenient user interaction, thereby improving the processing capability and expanding the scope of problems that can be addressed.

## Description

### TECHNICAL FIELD

The present disclosure relates to the technical field of photovoltaic (PV) control, specifically to the technical field of PV power station management, and in particular to an interactive PV information processing system and method.

### BACKGROUND TECHNOLOGY

The PV power station refers to a power generation system that harnesses solar energy, and includes electronic components made of special materials, such as crystalline silicon panels and inverters, and is connected to and supplies power to the power grid. As an operation and maintenance system applied to PV power stations, a PV power station management system plays a critical role in sustaining the normal operation of PV power stations. In particular, the processing of information flow is the top priority. Generally, the information flow may include working parameters and control parameters. The information management of PV power stations requires professionals. In particular, the extraction and analysis of information data, as well as the input and configuration of control parameters, demand higher technical proficiency. Therefore, ordinary users are essentially unable to perform independent information management for PV power stations.

In addition, current PV information management offers only a few preset forms for displaying charts or curves, lacking the capability for customized chart presentation, which further complicates the analysis of PV information.

Therefore, the development of a PV information management system and method accessible to ordinary users is a pressing technical issue that needs to be addressed.

### CONTENT OF THE INVENTION

To overcome at least one of the aforementioned drawbacks, a primary objective of the present disclosure is to provide an interactive photovoltaic (PV) information processing system, which can achieve guided control parameter configuration and customizable display of working parameters of a PV power station.

To overcome at least one of the aforementioned drawbacks, a primary objective of the present disclosure is to provide an interactive PV information processing method, which can achieve guided control parameter configuration and customizable display of working parameters of a PV power station.

In order to achieve the above objectives, the present disclosure adopts the following technical solutions:
The present disclosure provides an interactive PV information processing system, including:
a cloud side;
an application (APP) terminal, where the APP terminal is configured to receive an instruction input by a user, and is in communication connection with the cloud side;
a device side, where the device side is provided at a PV power station, and is configured to control and manage the PV power station; and the device side is in communication connection with the cloud side; and
an analysis and management unit, where the analysis and management unit is provided on the cloud side, and is configured to receive, parse, and process the instruction, retrieve corresponding data, and generate a natural language-based output instruction;
where, the output instruction is distributed to the device side by the analysis and management unit for parameter configuration, thereby enabling the issuance of a control parameter; and alternatively, the output instruction is distributed to the APP terminal by the analysis and management unit for chart-based information display, thereby enabling the reading and display of a working parameter.

According to an implementation of the present disclosure, the interactive PV information processing system further includes a real-time information management unit, where the real-time information management unit is connected to the analysis and management unit, and is configured to store information of a user account, information of a device bound to the user account, and various working parameters corresponding to the device; and the working parameters include a power parameter and an internal operating parameter of the PV power station.

According to an implementation of the present disclosure, the analysis and management unit includes an input preprocessing module, a context-based comprehensive processing module, and a large language model (LLM);
the input preprocessing module is configured to perform feature extraction on the instruction to generate valid feature data;
the context-based comprehensive processing module is configured to receive the valid feature data, and retrieve corresponding data to generate a comprehensive input instruction; and
the LLM is configured to receive and process the comprehensive input instruction to generate the natural language-based output instruction.

According to an implementation of the present disclosure, the input preprocessing module converts the instruction into a feature vector, searches for a predefined control parameter set from a vector database, filters the found control parameter set, and selects a control parameter set with high relevance as the valid feature data according to a threshold weight.

According to an implementation of the present disclosure, the context-based comprehensive processing module selects a correct control parameter and a to-be-set value of the correct control parameter through a prompt based on the instruction input by the user and the valid feature data, and takes the correct control parameter and the to-be-set value of the correct control parameter as the comprehensive input instruction.

According to an implementation of the present disclosure, the analysis and management unit further includes a memory storage module; and the memory storage module is configured to store PV standard data and real-time interaction data and is connected to the context-based comprehensive processing module.

According to an implementation of the present disclosure, the analysis and management unit further includes an output parsing module; and the output parsing module is configured to receive and parse the output instruction to generate the control parameters or chart data.

According to an implementation of the present disclosure, the control parameter is distributed to the device side by the analysis and management unit for parameter configuration, thereby enabling the issuance of the control parameter.

According to an implementation of the present disclosure, the output parsing module is provided with a plurality of chart templates; and each of the chart templates includes coordinate axis information, data content, and chart style.

According to an implementation of the present disclosure, the user inputs a temporary supplementary instruction via the APP terminal; and the analysis and management unit receives, parses, and processes the temporary supplementary instruction to complete or modify the chart data.

According to an implementation of the present disclosure, the interactive PV information processing system further includes a routing unit, where the routing unit is connected to the analysis and management unit, and is configured to distribute the output instruction to the APP terminal or the device side to perform a corresponding execution action.

According to an implementation of the present disclosure, the interactive PV information processing system further includes an invocation and execution unit, where the invocation and execution unit is connected to the routing unit, and is configured to determine to invoke the APP terminal or the device side to perform the corresponding execution action according to the output instruction distributed by the routing unit.

According to an implementation of the present disclosure, the instruction input by the user is in the form of voice or text.

In particular, the present disclosure further provides an interactive PV information processing method, including following processing steps:
inputting, by a user, an instruction via an APP terminal, and sending the input instruction to an analysis and management unit; and
analyzing and processing, by an analysis and management unit, the instruction to generate a natural language-based output instruction, and performing format parsing on the output instruction to generate a feedback instruction or an executable control instruction;
where, the feedback instruction is distributed to the APP terminal by the analysis and management unit for information display, thereby enabling the reading and display of a working parameter; and the control instruction is distributed to a device side by the analysis and management unit for parameter configuration, thereby enabling the issuance of a control parameter.

According to an implementation of the present disclosure, the interactive PV information processing method includes: when the instruction corresponds to a parameter configuration condition: performing, by an input preprocessing module of the analysis and management unit, feature extraction on a keyword of the instruction to generate second valid feature data; retrieving corresponding required data from PV standard data according to the second valid feature data; comparing, by a context-based comprehensive processing module, the retrieved corresponding required data with the instruction; successfully generating a second input instruction if the second valid feature data is within a PV standard range; otherwise, interacting with the user via the APP terminal to correct the instruction, until the second input instruction is successfully generated; aggregating the second input instruction and the second valid feature data to generate a second comprehensive input instruction, and sending the second comprehensive input instruction to an LLM; and reading and processing, by the LLM, the second comprehensive input instruction to generate the natural language-based output instruction.

According to an implementation of the present disclosure, the interactive PV information processing method includes: converting, by the input preprocessing module, the instruction into a feature vector, searching for a predefined control parameter set from a vector database, filtering the found control parameter set, and selecting a control parameter set with high relevance as the second valid feature data according to a threshold weight.

According to an implementation of the present disclosure, the interactive PV information processing method includes: selecting, by the context-based comprehensive processing module, a correct control parameter and a to-be-set value of the correct control parameter through a prompt based on the instruction input by the user and the second valid feature data, and taking the correct control parameter and the to-be-set value of the correct control parameter as the second input instruction.

According to an implementation of the present disclosure, the interactive PV information processing method includes: receiving and parsing, by an output parsing module of the analysis and management unit, the output instruction to generate the control instruction, and sending the control instruction to the device side, such that the device side performs parameter configuration according to the control instruction.

According to an implementation of the present disclosure, a feature forming the parameter configuration condition or a feature forming the parameter display condition is extracted from a voice or text input by the user.

According to an implementation of the present disclosure, the interactive PV information processing method includes: interacting with the user via the APP terminal during the generation of the second input instruction, such that a supplementary instruction is input as a constraint for computational optimization of the second input instruction.

According to an implementation of the present disclosure, the interactive PV information processing method includes: when the instruction corresponds to a parameter display condition: performing, by an input preprocessing module of the analysis and management unit, feature extraction on a keyword of the instruction to generate first valid feature data; retrieving corresponding required data from a real-time information management unit according to the first valid feature data to generate a first input instruction; aggregating the first input instruction and the first valid feature data to generate a first comprehensive input instruction, and sending the first comprehensive input instruction to an LLM; and reading and processing, by the LLM, the first comprehensive input instruction to generate the natural language-based output instruction.

According to an implementation of the present disclosure, the interactive PV information processing method includes: receiving and parsing, by an output parsing module of the analysis and management unit, the output instruction to generate chart data, and sending the chart data to the APP terminal, such that the APP terminal generates a dialog box or a chart for display according to the chart data.

According to an implementation of the present disclosure, the chart is a bar chart, a column chart, a line chart, or a pie chart.

According to an implementation of the present disclosure, the interactive PV information processing method includes: inputting, by the user, a follow-up instruction after the chart is generated on the APP terminal; and retrieving, by the analysis and management unit, PV standard data according to the follow-up instruction to analyze the chart, and outputting a chart analysis result.

In particular, the present disclosure further provides a computing device, including a memory, a processor, and a computer program stored in the memory and executable on the processor, where the computer program is executed by the processor to implement the aforementioned method.

The present disclosure further provides a computer-readable storage medium, where the computer-readable storage medium is configured to store a computer program, and the computer program is executed by a processor to implement the aforementioned method. The computer-readable storage medium is preferably a non-transitory readable storage medium.

Compared with the prior art, the interactive PV information processing system and method of the present disclosure have the following advantages and beneficial effects:
In the present disclosure, the interactive PV information processing system simplifies the user input at a terminal. The user only needs to input working requirements through voice or text. After analysis by the analysis and management unit, an output instruction is generated according to the input instruction. The output instruction can form a control parameter to specifically configure the parameters of the device side, and alternatively, the working parameters and the control parameter can be converted into chart-based data to be displayed on the APP terminal. This can reduce the technical operation threshold for users of the interactive PV information processing system, and enable better management of the PV power station while enhancing user experience.

Moreover, the present disclosure innovatively introduces the LLM (such as the chat generative pre-trained transformer (ChatGPT) model). The input side of the LLM receives the comprehensive input instruction in text form, and its output side outputs the output instruction based on natural language. Both front-end input and back-end processing and output are based on natural language processing, which is more in line with the usage needs of conventional users. In the final specific execution, the natural language-based output instruction is converted into a corresponding format for specific execution, reducing the processing difficulty of the PV information processing method. Moreover, the charts that can be presented are diversified, thereby better satisfying user needs.

### DESCRIPTION OF THE DRAWINGS

Some specific embodiments of the present disclosure will be described in detail below in an illustrative rather than restrictive manner with reference to the drawings. The same reference numerals in the drawings refer to like or similar components or parts. Those skilled in the art should understand that the drawings are not plotted to scale. In the drawings:
FIG. 1 is a structural block diagram of an interactive PV information processing system according to an embodiment of the present disclosure;
FIG. 2 is a schematic flowchart of an interactive PV information processing method, for configuring a control parameter, according to an embodiment of the present disclosure;
FIG. 3 is a structural diagram of a computing device according to another embodiment of the present disclosure;
FIG. 4 is a structural diagram of a computer-readable storage medium according to another embodiment of the present disclosure;
FIG. 5 is a schematic diagram of an interface of an APP terminal for configuring the control parameter according to an embodiment of the present disclosure;
FIG. 6 is a schematic flowchart of the interactive PV information processing method, for reading and displaying a working parameter, according to an embodiment of the present disclosure;
FIG. 7 is a schematic diagram of an interface of the APP terminal for reading and displaying the working parameter according to an embodiment of the present disclosure; and
FIG. 8 is a schematic flowchart of the interactive PV information processing method, for further analysis, according to another embodiment of the present disclosure.

### SPECIFIC IMPLEMENTATIONS

The following clearly and completely describes the technical solutions of the present disclosure with reference to the accompanying drawings. Apparently, the described embodiments are merely some rather than all of the embodiments of the present disclosure. All other embodiments obtained by a person of ordinary skill in the art based on the embodiments of the present disclosure without creative efforts shall fall within the scope of protection of the present disclosure.

In addition, the technical features involved in the various implementations of the present disclosure described below may be combined with each other as long as they do not constitute a conflict with each other.

### Embodiment 1

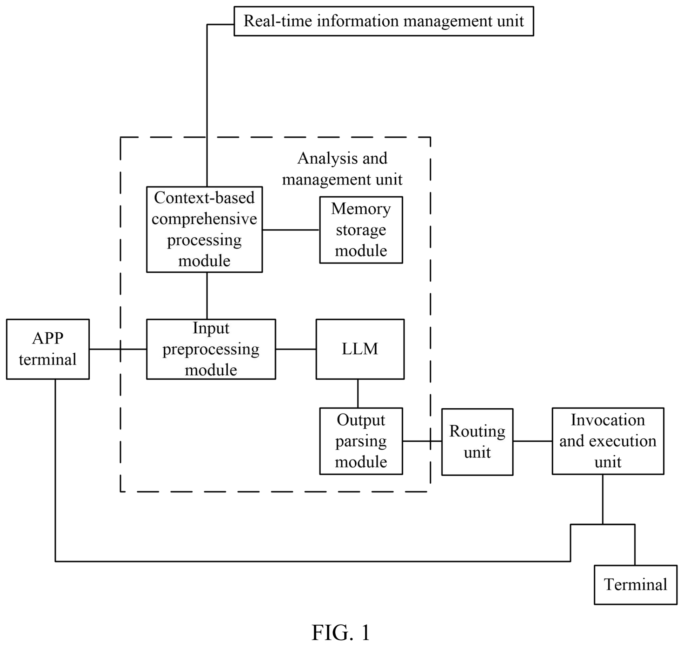

The embodiment provides an interactive PV information processing system, as shown in FIG. 1, which includes:
a cloud side;
an application (APP) terminal, where the APP terminal is configured to receive an instruction input by a user, and is in communication connection with the cloud side;
a device side, where the device side is provided at a PV power station, and is configured to control and manage the PV power station; and the device side is in communication connection with the cloud side; generally, the PV power station includes equipment such as a solar cell array, a storage battery pack, a charge-discharge controller, an inverter, an alternating current (AC) distribution cabinet, and a solar tracking control system; and in the embodiment, the device side refers to the aforementioned equipment such as the charge-discharge controller, the inverter, the AC distribution cabinet, and the solar tracking control system; and
an analysis and management unit, where in the embodiment, the analysis and management unit is provided on the cloud side, and is configured to receive, parse, and process the instruction, retrieve corresponding data, and generate a natural language-based output instruction.

The output instruction is distributed to the APP terminal by the analysis and management unit for information display, thereby enabling the reading and display of a working parameter. Alternatively, the output instruction is distributed to the device side by the analysis and management unit for parameter configuration, thereby enabling the issuance of a control parameter.

The APP terminal may be provided in a communication terminal such as a mobile phone and a tablet, or in a dedicated device. The instruction input by the user at the APP terminal may be in the form of voice or text. After the instruction is sent to the analysis and management unit of the cloud side, data processing based on a text feature may be directly performed. That is to say, in the embodiment, the initial user input is a natural language input, and the output instruction generated by processing through the analysis and management unit of the cloud side is a natural language-based output instruction. The interaction between the user and the APP terminal is based on natural language, making communication smoother and more convenient, and facilitating the operation and use by ordinary users.

In addition, in the embodiment, the analysis and management unit can not only be provided on the cloud side, but can also be provided on the terminal or the device side, which is adjustable according to the user's usage requirement and data processing performance of each side. Moreover, the functional modules in the analysis and management unit can be reasonably split and arranged on one of the terminal, the device side, and the cloud side. That is to say, the processing of the analysis and management unit is achieved by combining the functional modules of the terminal, the device side, or the cloud side, which is also technically feasible.

In the embodiment, the interactive PV information processing system simplifies the user input at the terminal. The user only needs to input working requirements through voice or text. After analysis by the analysis and management unit, an output instruction is generated according to the input instruction. The output instruction can form a chart displayed on the APP terminal, or form a control parameter to specifically configure the parameters of the device side. This can reduce the technical operation threshold for users of the interactive PV information processing system, and enable better management of the PV power station while enhancing user experience.

In an implementation, the interactive PV information processing system further includes a real-time information management unit. The real-time information management unit is connected to the analysis and management unit, and is configured to store information of a user account, information of a device bound to the user account, and various working parameters corresponding to the device. The working parameters include a power parameter and an internal operating parameter of the PV power station.

Specifically, in an implementation, the analysis and management unit includes an input preprocessing module, a context-based comprehensive processing module, and a large language model (LLM).

The input preprocessing module is configured to perform feature extraction on the instruction to generate valid feature data.

The context-based comprehensive processing module is configured to receive the valid feature data, and retrieve corresponding data to generate a comprehensive input instruction.

The LLM is configured to receive and process the comprehensive input instruction to generate the natural language-based output instruction.

The reading and display of the working parameter may involve conventional chart-based display. That is, the working parameters, such as the input power and output power of the device side, and the power generation curve of the PV power station, are displayed through preset curves, and can be traced back according to the preset time. The working parameters of the PV power station are fed back to the analysis and management unit of the cloud side in real time through the device side. When the above curves are displayed, data can be downloaded from the cloud side and fed back to the APP terminal, which represents the preset curve display method found in the prior art. The user can input an instruction to directly retrieve and display these preset curves.

Different from the prior art, in the embodiment, the user can independently set query conditions, enabling them to independently combine to form customized charts or curves. For example, the user directly issues the following instruction by voice: "I want to check the optical power curve and load power curve of the past month, and check how much electricity I have sold back to the power grid in the past month." The APP terminal sends the instruction to the cloud side, and the analysis and management unit of the cloud side performs feature extraction on the instruction to generate valid feature data. The valid feature data includes the following keywords: "I, past month, optical power curve, load power curve, sold electricity". The analysis and management unit queries the device under the user account, and retrieves the device working parameters stored on the cloud side. In the embodiment, the device working parameters include optical power data, load power data, and power transaction data in the past month, which are then sent to the LLM.

The valid feature data itself is a language feature, i.e., text, and the retrieved data is composed of text and numbers. Thus, the valid feature data and the device working parameters are aggregated to generate a comprehensive input instruction. The obtained comprehensive input instruction also exists in the form of text. After the comprehensive input instruction is input into the LLM, it is trained and integrated to generate a natural language-based output instruction. The output instruction is parsed, and then displayed as a customized chart on the APP terminal. The parsing of the chart data is to convert it into a digital form to facilitate display on the APP terminal.

In the embodiment, the LLM is a currently popular ChatGPT model, which is a natural language processing tool driven by artificial intelligence (AI) technology, capable of performing conversations by understanding and learning human language, and also capable of interacting according to the context of the conversation. Therefore, in the embodiment, the context-based comprehensive processing module outputs the comprehensive input instruction to the LLM to generate the natural language-based output instruction. The ChatGPT model can either be trained using an open-source algorithm to obtain a trained model, or be deployed after being fine-tuned based on an open-source model. Taking start-up as an example, fine-tuning can convert the start-up process into a series of conversations, which are taken as training data to fine-tune the LLM, thereby making it more suitable for the start-up scenario.

The formatted conversion from the output instruction to the chart data is achieved by the output parsing module in the analysis and management unit. The output parsing module receives and parses the output instruction to generate the chart data or control parameter. The feedback instruction is distributed to the APP terminal by the analysis and management unit for information display, thereby enabling the reading and display of a working parameter. The control instruction is distributed to the device side by the analysis and management unit for parameter configuration, thereby enabling the issuance of a control parameter.

As for the display of customized charts, it can further solve the problem of directional chart display. Taking the tracing of the ground insulation resistance as an example, when a short circuit occurs at the PV power station, the ground insulation resistance of the PV power station drops below the safe threshold. However, since the short circuit at the PV power station usually develops progressively, the ground insulation resistance also exhibits a gradual decline. Therefore, the user only needs to say "find the time when the short circuit occurred". The analysis and management unit traces back the ground insulation resistance within a period of time according to the instruction. It then feeds the ground insulation resistance back for processing through the LLM to generate chart data, and returns the chart data to the APP terminal. The user can determine the starting time point of the short circuit according to the change of the ground insulation resistance in the chart.

Of course, some users cannot fully understand the above chart of the ground insulation resistance, as they are not professionals. On the basis of the chart, the user can directly say "analyze the chart and tell me the cause of the short circuit", that is, analysis is performed by inputting a follow-up instruction based on the generated chart. After receiving the follow-up instruction "analyze the chart and tell me the cause of the short circuit", the analysis and management unit processes the change points in the chart, records the change time (in the form of natural language), retrieves PV standard data to analyze the approximate cause of the short circuit, and even identify the location of the faulty component, and then generates a natural language-based output instruction. The LLM then sends the output instruction back to the APP terminal for display in the form of voice or text, completing intelligent interaction with the user. Of course, if the user has further questions, the user can input another instruction for additional analysis. It is worth noting that the interaction between the user and the APP terminal during this process is based on understandable natural language, which greatly enhances the user experience and enables the user to cooperate with the analysis and management unit to perform complex technical analysis through simple operations.

For the issuance of the control parameter, automated and programmed configuration for conventional inherent modes can be achieved, and the user can also independently complete guided modification of device parameters in an interactive state. The key in this process is that instructions can be directly input in linguistic form, especially vial voice input, without the need to open professional debugging windows for the user. The instruction input by the user is subjected to feature extraction to generate valid feature data, which is sent to the context-based comprehensive processing module. According to the valid feature data, the context-based comprehensive processing module retrieves relevant parameters from the PV standard data. After these parameters are sent to the LLM, the LLM generates a natural language-based output instruction to present to the user on the APP terminal, simultaneously prompting for user confirmation. Finally, the modification of the control parameter is ultimately implemented based on the instructions input by the user during interactions.

The input preprocessing module converts the instruction input by the user into a feature vector, searches for a predefined control parameter set from a vector database, filters the found control parameter set, and selects a control parameter set with high relevance as the valid feature data according to a threshold weight. The context-based comprehensive processing module selects a correct control parameter and a to-be-set value of the correct control parameter through a prompt based on the instruction input by the user and the valid feature data, and takes the correct control parameter and the to-be-set value of the correct control parameter as the comprehensive input instruction.

The automated and programmed configuration for inherent modes refers to fixed designs for conventional working modes, which are pre-configured in the system. For example, to change the PV storage mode, which generally includes maximum self-consumption, time of use (TOU) mode, discharge priority, and charge priority, the user only needs to input an instruction such as "I want the PV power station to enter TOU mode". After receiving the instruction, the analysis and management unit can adjust the device side bound to the user account to enter the TOU mode according to the keywords "PV power station" and "TOU mode". Of course, during the process, language interaction with the user can also be performed via the APP terminal to achieve refined adjustment of the control parameter.

Independent guided modification of device parameters in an interactive state targets the personalized modification of internal parameters of the device side. Examples include altering protection parameters (adjusting grid protection set-points up or down), modifying the state of charge (SOC) of the energy storage battery, and conducting fine-grained fault detection (which involves more interactions and inquiries with the user).

Adjusting the SOC of the energy storage battery helps protect the energy storage battery in the PV power station and extend its service life. After the user submits a request via the APP terminal, the analysis and management unit can analyze the user's electricity consumption patterns, historical data, etc., to recommend a parameter configuration range, and then the user can confirm the configuration on the APP terminal.

Fine-grained fault detection can better reflect the advantages of the system. This is because some parameters cannot be directly obtained in the system, such as the status of onsite alarm lights, the actual surrounding environment of the PV power station, and the cable conditions of the PV power station, all of which need to be confirmed or input by the user. Taking the user's request to enable arc detection as an example, arc detection requires determining the length and conditions of the cables between the solar panels of the PV power station and the device side. However, the cables are passive components, and their parameters cannot be directly obtained. Therefore, the analysis and management unit returns an output instruction through the LLM to interact with the user, making a reverse request for relevant data from the user, and then issues a control parameter to initiate the detection. Then the device side feeds back the detection data in real time. The analysis and management module analyzes the feedback data in combination with the PV standard data, and finally presents the detection result to the user on the APP terminal.

In an implementation, the analysis and management unit further includes a memory storage module; and the memory storage module is configured to store PV standard data and real-time interaction data and is connected to the context-based comprehensive processing module. Specifically, the memory storage module includes a permanent storage sub-module and a flash storage sub-module; the permanent storage sub-module is configured to store the PV standard data; and the flash storage sub-module is configured to store the real-time interaction data. The PV standard data includes an API invocation document, a product specification, PV industry technical data, etc., and the real-time interaction data includes the valid feature data and response status data corresponding to the execution of the control instruction.

In an implementation, the interactive PV information processing system further includes a routing unit. The routing unit is connected to the analysis and management unit, and is configured to distribute the output instruction to the APP terminal or the device side to perform a corresponding execution action.

In an implementation, the interactive PV information processing system further includes an invocation and execution unit. The invocation and execution unit is connected to the routing unit, and is configured to determine to invoke the APP terminal or the device side to perform the corresponding execution action according to the output instruction distributed by the routing unit.

### Embodiment 2

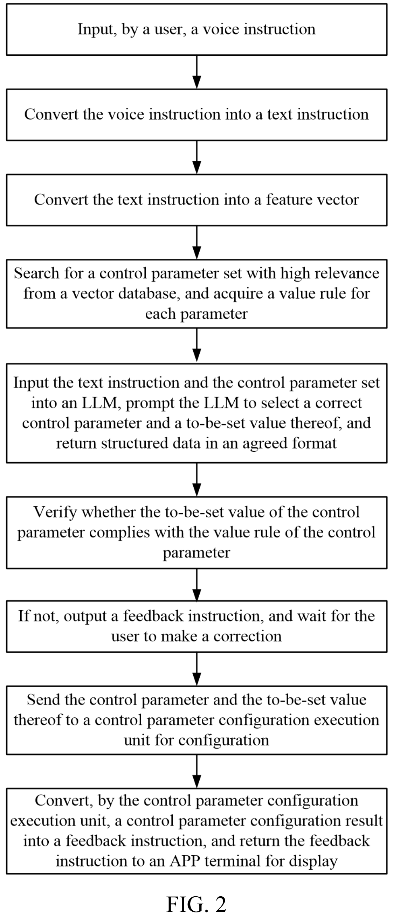

The embodiment of the present disclosure provides an interactive PV information processing method, as shown in FIG. 2, which includes following processing steps.

A user inputs an instruction via an APP terminal, and the input instruction is sent to an analysis and management unit.

An analysis and management unit analyzes and processes the instruction to generate a natural language-based output instruction, and performs format parsing on the output instruction to generate a feedback instruction or an executable control instruction.

The feedback instruction is distributed to the APP terminal by the analysis and management unit for information display, thereby enabling the reading and display of a working parameter. The control instruction is distributed to the device side by the analysis and management unit for parameter configuration, thereby enabling the issuance of a control parameter.

According to an implementation of the present disclosure, when the instruction corresponds to a parameter display condition, an input preprocessing module of the analysis and management unit performs feature extraction on a keyword of the instruction to generate first valid feature data. The input preprocessing module retrieves corresponding required data from a real-time information management unit according to the first valid feature data to generate a first input instruction. The input preprocessing module aggregates the first input instruction and the first valid feature data to generate a first comprehensive input instruction, and sends the first comprehensive input instruction to an LLM. The LLM reads and processes the first comprehensive input instruction to generate the natural language-based output instruction. A feature forming the parameter display condition is extracted from a voice or text input by the user.

Generally, the cloud side and the device side are in communication connection. The device side sends data such as the status of the PV power station, inverter, battery, and grid interconnection status to the cloud side. The cloud side stores the data in the real-time information management unit, which is connected to the context-based comprehensive processing module. Of course, the real-time information management unit can specifically be provided on the APP terminal or the device side for data management, as required, as long as the analysis and management unit can retrieve data therefrom. Specifically, the real-time information management unit stores information of the user account, information of the device bound to the user account, and various working parameters corresponding to the device. The working parameters include a power parameter and an internal operating parameter of the PV power station. The power parameter includes power data such as the output power, generated power, load power, and grid feed-in power of the PV power station, while the internal operating parameter may include the ground insulation resistance, working current and voltage, voltage and frequency of the grid connection point, etc.

The interaction between the user and the APP terminal is further described by taking the electricity management of the PV power station as an example. For example, the user starts the APP terminal and inputs an instruction to the APP terminal: "Show me the electricity generation in the last week". The APP terminal sends the instruction to the analysis and management unit, and the analysis and management unit extracts "last week" and "electricity generation" as the first valid feature data. Then the analysis and management unit retrieves the electricity generation data in the last week from the real-time information management unit and sends it to the LLM. The LLM processes the electricity generation data to generate a chart and sends it back to the APP terminal for display. After viewing the feedback chart, the user may have further questions, for example, the user may want to know how much of the electricity has been sold to the grid recently. The user can directly input a voice instruction: "How much of the electricity has been sold to the grid?" The keywords "how much of the electricity", "sold", and "grid" are extracted as the first valid feature data of the instruction, and the data of the electricity sold to the grid in the last week is output.

Furthermore, on this basis, the user may also input use-initiated instructions such as "What's the revenue" and "Is the revenue higher or lower than before", all of which can be processed by the method of the embodiment to generate a natural language output or a chart output. That is to say, when a chart is already generated on the APP terminal, the user inputs a follow-up instruction, and the analysis and management unit retrieves PV standard data to analyze the chart according to the follow-up instruction, and finally outputs a chart analysis result.

It can be seen that in the embodiment, for chart output, the method can not only provide preset conventional charts for the user to view, but also is not limited to preset charts. According to any valid instruction proposed by the user, the corresponding processing result can be sent after context analysis and LLM processing, during which data fed back by the device side and PV standard data can be retrieved. The integration of the LLM is also based on natural language, enabling quick processing on the retrieved data with high efficiency and accuracy.

In an implementation, an output parsing module of the analysis and management unit receives and parses the output instruction to generate the chart data, and sends the chart data to the APP terminal. The APP terminal generates a dialog box or a chart for display according to the chart data. The chart is a bar chart, a column chart, a line chart, or a pie chart.

When the instruction corresponds to a parameter configuration condition, an input preprocessing module of the analysis and management unit performs feature extraction on a keyword of the instruction to generate second valid feature data, retrieves corresponding required data from the PV standard data according to the second valid feature data, and compares the retrieved data with the instruction. If the second valid feature data is within a PV standard range, a second input instruction is successfully generated. Otherwise, an interaction with the user is enabled via the APP terminal to correct the instruction until the second input instruction is successfully generated. The second input instruction and the second valid feature data are aggregated to generate a second comprehensive input instruction, which is sent to an LLM. The LLM reads and processes the second comprehensive input instruction to generate a natural language-based output instruction. A feature forming the parameter configuration condition is extracted from a voice or text input by the user. During the generation of the second input instruction, an interaction with the user is enabled via the APP terminal to input a supplementary instruction, and the supplementary instruction serves as a constraint for computational optimization of the second input instruction.

As shown in FIG. 2, the input preprocessing module converts the instruction input by the user into a feature vector, searches for a predefined control parameter set from a vector database, filters the found control parameter set, and selects a control parameter set with high relevance as the second valid feature data according to a threshold weight. The context-based comprehensive processing module selects a correct control parameter and a to-be-set value of the correct control parameter through a prompt based on the instruction input by the user and the second valid feature data, and takes the correct control parameter and the to-be-set value of the correct control parameter as the second input instruction.

In an implementation, an output parsing module of the analysis and management unit receives and parses the output instruction to generate the control instruction, and sends the control instruction to the device side, such that the device side performs parameter configuration according to the control instruction.

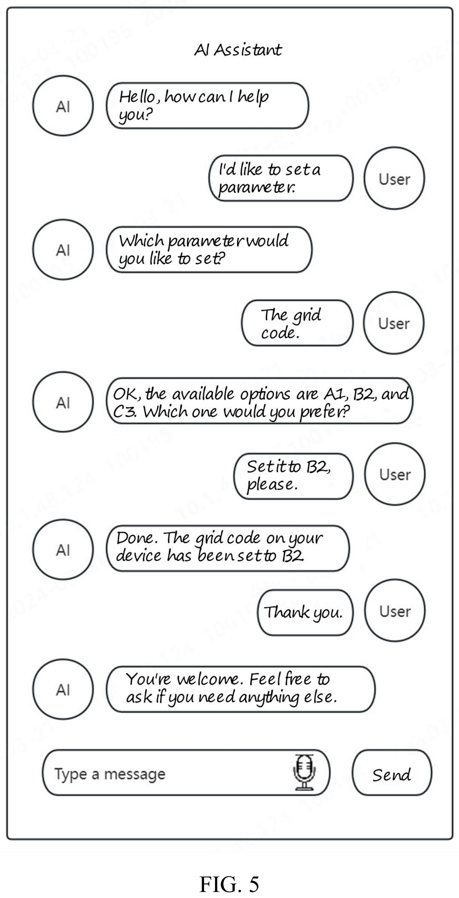

FIG. 5 shows an interface of the APP terminal, which illustrates the interactive configuration process of some parameters. The user begins by starting, "I'd like to set a parameter". After background analysis, the APP terminal further asks which parameter to set. After learning that the user wants to set "grid code", the APP terminal provides several available options for the grid code and prompts the user to input a supplementary instruction. Finally, according to the user's instruction input, the grid code is set to "B2".

In an implementation, the process of retrieving the corresponding required data from the PV standard data according to the second valid feature data is implemented through a support vector retrieval method.

In an implementation, the analysis and processing of the instruction through the analysis and management unit includes a step of cleaning the input instruction.

### Embodiment 3

The embodiment provides an interactive PV information processing system, as shown in FIG. 1, which includes:
a cloud side;
an application (APP) terminal, where the APP terminal is configured to receive an instruction input by a user, and is in communication connection with the cloud side;
a device side, where the device side is provided at a PV power station, and is configured to control and manage the PV power station; and the device side is in communication connection with the cloud side; generally, the PV power station includes equipment such as a solar cell array, a storage battery pack, a charge-discharge controller, an inverter, an alternating current (AC) distribution cabinet, and a solar tracking control system; and in the embodiment, the device side refers to the aforementioned equipment such as the charge-discharge controller, the inverter, the AC distribution cabinet, and the solar tracking control system; and
an analysis and management unit, where in the embodiment, the analysis and management unit is provided on the cloud side, and is configured to receive, parse, and process the instruction, retrieve corresponding data, and generate a natural language-based output instruction.

The output instruction is distributed to the APP terminal by the analysis and management unit for information display, thereby enabling the reading and display of a working parameter.

The APP terminal may be provided in a communication terminal such as a mobile phone and a tablet, or in a dedicated device. The instruction input by the user at the APP terminal may be in the form of voice or text. After the instruction is sent to the analysis and management unit of the cloud side, data processing based on a text feature may be directly performed. That is to say, in the embodiment, the initial user input is a natural language input, and the output instruction generated by processing through the analysis and management unit of the cloud side is a natural language-based output instruction. The interaction between the user and the APP terminal is based on natural language, making communication smoother and more convenient, and facilitating the operation and use by ordinary users.

In addition, in the embodiment, the analysis and management unit can not only be provided on the cloud side, but can also be provided on the terminal or the device side, which is adjustable according to the user's usage requirement and data processing performance of each side. Moreover, the functional modules in the analysis and management unit can be reasonably split and arranged on one of the terminal, the device side, and the cloud side. That is to say, the processing of the analysis and management unit is achieved by combining the functional modules of the terminal, the device side, or the cloud side, which is also technically feasible.

In the embodiment, the interactive PV information processing system simplifies the user input at the terminal. The user only needs to input working requirements through voice or text. After analysis by the analysis and management unit, an output instruction is generated according to the input instruction. The output instruction can form a chart displayed on the APP terminal. This can reduce the technical operation threshold for users of the interactive PV information processing system, and enable better management of the PV power station while enhancing user experience.

In an implementation, the interactive PV information processing system further includes a real-time information management unit. The real-time information management unit is connected to the analysis and management unit, and is configured to store information of a user account, information of a device bound to the user account, and various working parameters corresponding to the device. The working parameters include a power parameter and an internal operating parameter of the PV power station.

Specifically, in an implementation, the analysis and management unit includes an input preprocessing module, a context-based comprehensive processing module, and an LLM.

The input preprocessing module is configured to perform feature extraction on the instruction to generate valid feature data.

The context-based comprehensive processing module is configured to receive the valid feature data, and retrieve corresponding data to generate a comprehensive input instruction.

The LLM is configured to receive and process the comprehensive input instruction to generate the natural language-based output instruction.

The reading and display of the working parameter may involve conventional chart-based display. That is, the working parameters, such as the input power and output power of the device side, and the power generation curve of the PV power station, are displayed through preset curves, and can be traced back according to the preset time. The working parameters of the PV power station are fed back to the analysis and management unit of the cloud side in real time through the device side. When the above curves are displayed, data can be downloaded from the cloud side and fed back to the APP terminal, which represents the preset curve display method found in the prior art. The user can input an instruction to directly retrieve and display these preset curves.

Different from the prior art, in the embodiment, the user can independently set query conditions, enabling them to independently combine to form customized charts or curves. For example, the user directly issues the following instruction by voice: "I want to check the optical power curve and load power curve of the past month, and check how much electricity I have sold back to the power grid in the past month." The APP terminal sends the instruction to the cloud side, and the analysis and management unit of the cloud side performs feature extraction on the instruction to generate valid feature data. The valid feature data includes the following keywords: "I, past month, optical power curve, load power curve, sold electricity". The analysis and management unit queries the device under the user account, and retrieves the device working parameters stored on the cloud side. In the embodiment, the device working parameters include optical power data, load power data, and power transaction data in the past month, which are then sent to the LLM.

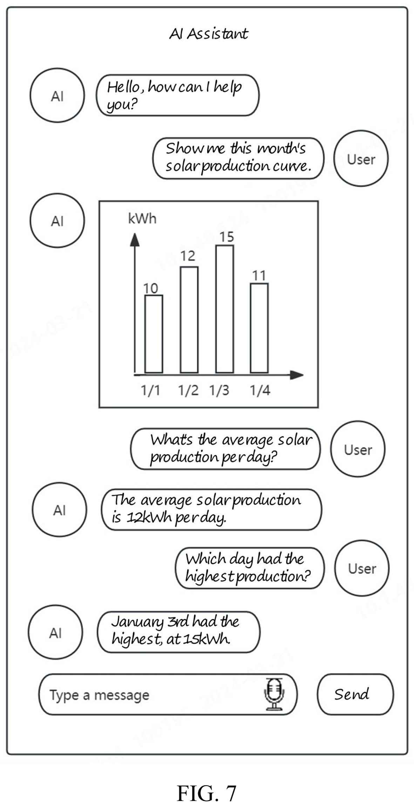

FIG. 7 shows an interface of the APP terminal, which illustrates the solar production curve of the past month. When a chart is already generated on the APP terminal, the user inputs a follow-up instruction, and the analysis and management unit retrieves PV standard data to analyze the chart according to the follow-up instruction, and finally outputs a chart analysis result, such as in response to inquiries like "How much electricity is generated on average per day?" and "Which day has the highest electricity generation?", etc.

The valid feature data itself is a language feature, i.e., text, and the retrieved data is composed of text and numbers. Thus, the valid feature data and the device working parameters are aggregated to generate a comprehensive input instruction. The obtained comprehensive input instruction also exists in the form of text. After the comprehensive input instruction is input into the LLM, it is trained and integrated to generate a natural language-based output instruction. The output instruction is parsed, and then displayed as a customized chart on the APP terminal. The parsing of the chart data is to convert it into a digital form to facilitate display on the APP terminal.

In the embodiment, the LLM is a currently popular ChatGPT model, which is a natural language processing tool driven by artificial intelligence (AI) technology, capable of performing conversations by understanding and learning human language, and also capable of interacting according to the context of the conversation. Therefore, in the embodiment, the context-based comprehensive processing module outputs the comprehensive input instruction to the LLM to generate the natural language-based output instruction. The ChatGPT model can either be trained using an open-source algorithm to obtain a trained model, or deployed after being fine-tuned based on an open-source model. Taking start-up as an example, fine-tuning can convert the start-up process into a series of conversations, which are taken as training data to fine-tune the LLM, thereby making it more suitable for the start-up scenario.

The formatted conversion from the output instruction to the chart data is achieved by the output parsing module in the analysis and management unit. The output parsing module is provided with a plurality of chart templates, and each of the chart templates includes coordinate axis information, data content, and chart style. The output parsing module receives and parses the output instruction to generate the chart data, thereby generating a feedback instruction. The feedback instruction is distributed to the APP terminal by the analysis and management unit for information display, thereby enabling the reading and display of a working parameter. The user inputs a temporary supplementary instruction via the APP terminal, and the analysis and management unit receives, parses, and processes the temporary supplementary instruction to complete or modify the chart data.

As for the display of customized charts, it can further solve the problem of directional chart display. Taking the tracing of the ground insulation resistance as an example, when a short circuit occurs at the PV power station, the ground insulation resistance of the PV power station drops below the safe threshold. However, since the short circuit at the PV power station usually develops progressively, the ground insulation resistance also exhibits a gradual decline. Therefore, the user only needs to say "find the time when the short circuit occurred". The analysis and management unit traces back the ground insulation resistance within a period of time according to the instruction. It then feeds the ground insulation resistance back for processing through the LLM to generate chart data, and returns the chart data to the APP terminal. The user can determine the starting time point of the short circuit according to the change of the ground insulation resistance in the chart.

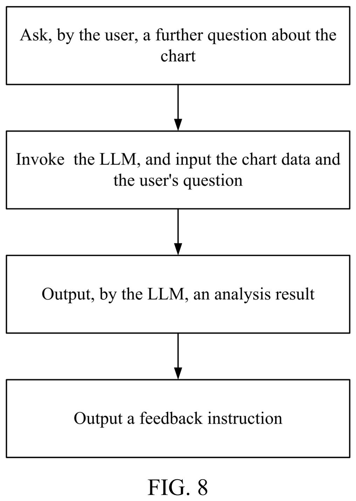

Of course, some users cannot fully understand the above chart of the ground insulation resistance, as they are not professionals. On the basis of the chart, the user can directly say "analyze the chart and tell me the cause of the short circuit", that is, analysis is performed by inputting a follow-up instruction based on the generated chart, as shown in FIG. 8. After receiving the follow-up instruction "analyze the chart and tell me the cause of the short circuit", the analysis and management unit processes the change points in the chart, records the change time (in the form of natural language), retrieves PV standard data to analyze the approximate cause of the short circuit, and even identify the location of the faulty component, and then generates a natural language-based output instruction. The LLM then sends the output instruction back to the APP terminal for display in the form of voice or text, completing intelligent interaction with the user. Of course, if the user has further questions, the user can input another instruction for additional analysis. It is worth noting that the interaction between the user and the APP terminal during this process is based on understandable natural language, which greatly enhances the user experience and enables the user to cooperate with the analysis and management unit to perform complex technical analysis through simple operations.

In an implementation, the analysis and management unit further includes a memory storage module; and the memory storage module is configured to store PV standard data and real-time interaction data and is connected to the context-based comprehensive processing module. Specifically, the memory storage module includes a permanent storage sub-module and a flash storage sub-module; the permanent storage sub-module is configured to store the PV standard data; and the flash storage sub-module is configured to store the real-time interaction data. The PV standard data includes an API invocation document, a product specification, PV industry technical data, etc., and the real-time interaction data includes the valid feature data and data corresponding to the interaction of the feedback instruction.

### Embodiment 4

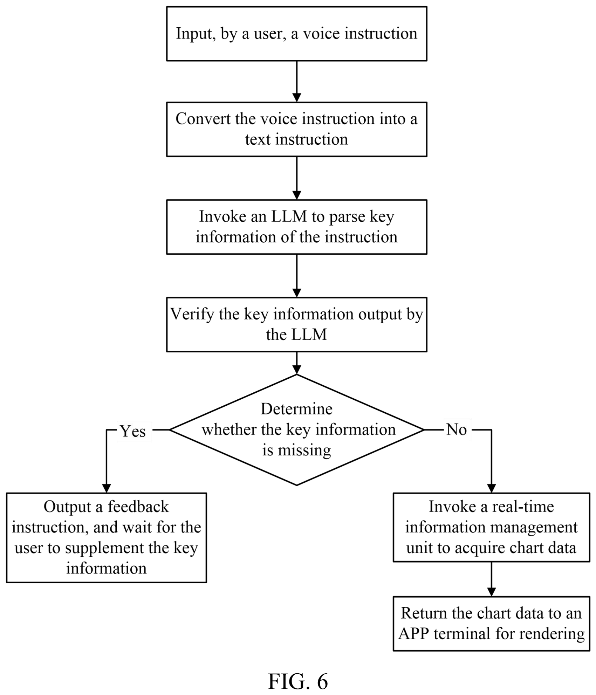

The embodiment of the present disclosure provides an interactive PV information processing method, as shown in FIG. 6, which includes following processing steps.

A user inputs an instruction via an APP terminal, and the input instruction is sent to an analysis and management unit.

An analysis and management unit analyzes and processes the instruction to generate a natural language-based output instruction, and performs format parsing on the output instruction to generate a feedback instruction.

The feedback instruction is distributed to the APP terminal by the analysis and management unit for information display, thereby enabling the reading and display of a working parameter.

According to an implementation of the present disclosure, when the instruction corresponds to a parameter display condition, an input preprocessing module of the analysis and management unit performs feature extraction on a keyword of the instruction to generate first valid feature data. The input preprocessing module retrieves corresponding required data from a real-time information management unit according to the first valid feature data to generate a first input instruction. The input preprocessing module aggregates the first input instruction and the first valid feature data to generate a first comprehensive input instruction, and sends the first comprehensive input instruction to an LLM. The LLM reads and processes the first comprehensive input instruction to generate the natural language-based output instruction. A feature forming the parameter display condition is extracted from a voice or text input by the user.

Generally, the cloud side and the device side are in communication connection. The device side sends data such as the status of the PV power station, inverter, battery, and grid interconnection status to the cloud side. The cloud side stores the data in the real-time information management unit, which is connected to the context-based comprehensive processing module. Of course, the real-time information management unit can specifically be provided on the APP terminal or the device side for data management, as required, as long as the analysis and management unit can retrieve data therefrom. Specifically, the real-time information management unit stores information of the user account, information of the device bound to the user account, and various working parameters corresponding to the device. The working parameters include a power parameter and an internal operating parameter of the PV power station. The power parameter includes power data such as the output power, generated power, load power, and grid feed-in power of the PV power station, while the internal operating parameter may include the ground insulation resistance, working current and voltage, voltage and frequency of the grid connection point, etc.

The interaction between the user and the APP terminal is further described by taking the electricity management of the PV power station as an example. For example, the user starts the APP terminal and inputs an instruction to the APP terminal: "Show me the electricity generation in the last week". The APP terminal sends the instruction to the analysis and management unit, and the analysis and management unit extracts "last week" and "electricity generation" as the first valid feature data. Then the analysis and management unit retrieves the electricity generation data in the last week from the real-time information management unit and sends it to the LLM. The LLM processes the electricity generation data to generate a chart and sends it back to the APP terminal for display. After viewing the feedback chart, the user may have further questions, for example, the user may want to know how much of the electricity has been sold to the grid recently. The user can directly input a voice instruction: "How much of the electricity has been sold to the grid?" The keywords "how much of the electricity", "sold", and "grid" are extracted as the first valid feature data of the instruction, and the data of the electricity sold to the grid in the last week is output.

Furthermore, on this basis, the user may also input use-initiated instructions such as "What's the revenue" and "Is the revenue higher or lower than before", all of which can be processed by the method of the embodiment to generate a natural language output or a chart output. That is to say, as shown in FIG. 6, when a chart is already generated on the APP terminal, the user inputs a follow-up instruction, and the analysis and management unit retrieves PV standard data to analyze the chart according to the follow-up instruction, and finally outputs a chart analysis result.

It can be seen that in the embodiment, for chart output, the method can not only provide preset conventional charts for the user to view, but also is not limited to preset charts. According to any valid instruction proposed by the user, the corresponding processing result can be sent after context analysis and LLM processing, during which data fed back by the device side and PV standard data can be retrieved. The integration of the LLM is also based on natural language, enabling quick processing on the retrieved data with high efficiency and accuracy.

In an implementation, an output parsing module of the analysis and management unit receives and parses the output instruction to generate the chart data, and sends the chart data to the APP terminal. The APP terminal generates a dialog box or a chart for display according to the chart data. The chart is a bar chart, a column chart, a line chart, or a pie chart.

In an implementation, the analysis and processing of the instruction through the analysis and management unit includes a step of cleaning the input instruction.

It can be seen that the LLM (such as the ChatGPT model) is innovatively introduced, which includes an input side for receiving the comprehensive input instruction in text form and an output side for providing the natural language-based output instruction. The front-end input and back-end processing and output are based on natural language processing, which better aligns with the usage requirements of conventional users. In the final specific execution, the natural language-based output instruction is converted into a corresponding format for specific execution, reducing the processing difficulty of the PV information processing method. Moreover, the charts that can be presented are diversified, thereby better satisfying user needs.

The following detailed description of the specific embodiments of the present disclosure based on the drawings will help those skilled in the art to understand the above and other objectives, advantages and features of the present disclosure.

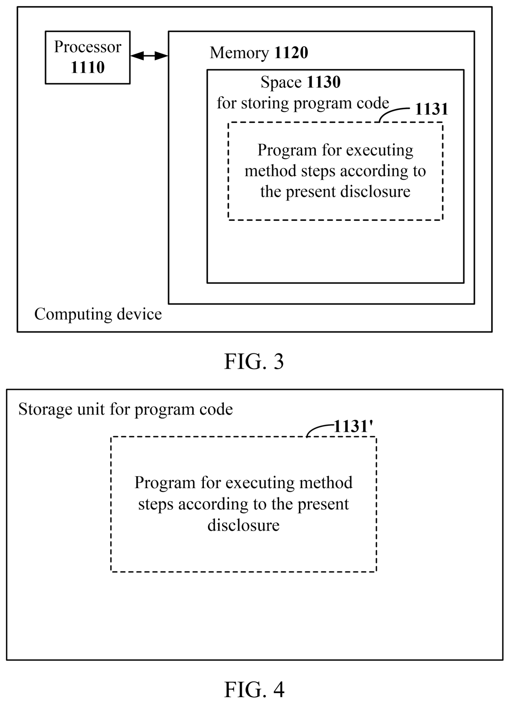

An embodiment of the present disclosure further provides a computing device. Referring to FIG. 3, the computing device includes memory 1120, processor 1110, and a computer program stored in the memory 1120 and executable by the processor 1110. The computer program is stored in space 1130 for storing a program code in the memory 1120, and when executed by the processor 1110, the computer program is configured to implement any one of the steps 1131 of the method according to the present disclosure.

An embodiment of the present disclosure further provides a computer-readable storage medium. Referring to FIG. 4, the computer-readable storage medium includes a storage unit for storing a program code. The storage unit is provided with program 1131' configured to implement the steps of the method according to the present disclosure, and the program is executed by a processor.

An embodiment of the present disclosure further provides a computer program product including an instruction. When the computer program product is run on a computer, the computer is caused to execute the steps of the method according to the present disclosure.

Some or all of the functions in the foregoing embodiments may be implemented by software, hardware, firmware, or any combination thereof. When software is used for implementation, the implementation can be performed in a form of a computer program product in whole or in part. The computer program product includes one or more computer instructions. When the computer program instructions are loaded and executed on a computer, the procedures or functions according to the embodiments of the present disclosure are achieved in whole or in part. The computer may be a general-purpose computer, a dedicated computer, a computer network, or another programmable apparatus. The computer instructions may be stored in a computer-readable storage medium or may be sent from a computer-readable storage medium to another computer-readable storage medium. For example, the computer instructions may be sent from a website, computer, server, or data center to another website, computer, server, or data center in a wired (for example, a coaxial cable, an optical fiber, or a digital subscriber line (DSL)) or wireless (for example, infrared, radio, and microwave, etc.) manner. The computer-readable storage medium may be any usable medium accessible by a computer, or a data storage device, such as a server or a data center, integrating one or more usable media. The usable medium may be a magnetic medium (for example, a floppy disc, a hard disc, or a magnetic tape), an optical medium (for example, a digital video disc (DVD)), a semiconductor medium (for example, a solid state disc (SSD)), etc.

Those skilled in the art should further realize that, the units and algorithmic steps of the examples described in the embodiments of the present disclosure can be implemented with electronic hardware, computer software, or a combination thereof. In order to clearly describe the interchangeability between the hardware and the software, compositions and steps of each example are generally described above according to functions. Whether the functions are performed by hardware or software depends on particular applications and design constraints of the technical solutions. A person skilled in the art may use different methods to implement the described functions for each specific application, but such implementation should not be considered to be beyond the scope of the present disclosure.

A person of ordinary skill in the art will appreciate that all or part of the steps in the method of the aforementioned embodiments can be implemented by instructing a processor via a program. The program may be stored in a computer-readable storage medium. The storage medium is a non-transitory medium, such as random access memory (RAM), read-only memory (ROM), flash memory, hard disc, solid-state drive (SSD), magnetic tape, floppy disc, optical disc, and any combination thereof.

In particular, the present disclosure further provides a computing device, including a memory, a processor, and a computer program stored in the memory and executable on the processor, where the computer program is executed by the processor to implement the aforementioned method.

The present disclosure further provides a computer-readable storage medium, where the computer-readable storage medium is configured to store a computer program, and the computer program is executed by a processor to implement the aforementioned method. The computer-readable storage medium is preferably a non-transitory readable storage medium.

The aforementioned embodiments are provided merely to illustrate the technical concept and features of the present disclosure, for the purpose of enabling those skilled in the art to understand the content of the present disclosure and implement the same accordingly, and shall not be construed as limiting the protection scope of the present disclosure. Any equivalent changes or modifications made in accordance with the spirit and essence of the present disclosure shall fall within the protection scope of the present disclosure.

## Claims

1. An interactive photovoltaic (PV) information processing system, comprising:
a cloud side;
an application (APP) terminal, wherein the APP terminal is configured to receive an instruction input by a user, and is in communication connection with the cloud side;
a device side, wherein the device side is provided at a PV power station, and is configured to control and manage the PV power station; and the device side is in communication connection with the cloud side; and
an analysis and management unit, wherein the analysis and management unit is provided on the cloud side, and is configured to receive, parse, and process the instruction, retrieve corresponding data, and generate a natural language-based output instruction;
wherein the output instruction is distributed to the device side by the analysis and management unit for parameter configuration, thereby enabling the issuance of a control parameter; and alternatively, the output instruction is distributed to the APP terminal by the analysis and management unit for chart-based information display, thereby enabling the reading and display of a working parameter.

2. The interactive PV information processing system according to claim 1, further comprising a real-time information management unit, wherein the real-time information management unit is connected to the analysis and management unit, and is configured to store information of a user account, information of a device bound to the user account, and various working parameters corresponding to the device; and the working parameters comprise a power parameter and an internal operating parameter of the PV power station.

3. The interactive PV information processing system according to claim 1, wherein the analysis and management unit comprises an input preprocessing module, a context-based comprehensive processing module, and a large language model (LLM);
the input preprocessing module is configured to perform feature extraction on the instruction to generate valid feature data;
the context-based comprehensive processing module is configured to receive the valid feature data, and retrieve corresponding data to generate a comprehensive input instruction; and
the LLM is configured to receive and process the comprehensive input instruction to generate the natural language-based output instruction.

4. The interactive PV information processing system according to claim 3, wherein the input preprocessing module converts the instruction into a feature vector, searches for a predefined control parameter set from a vector database, filters the found control parameter set, and selects a control parameter set with high relevance as the valid feature data according to a threshold weight.

5. The interactive PV information processing system according to claim 4, wherein the context-based comprehensive processing module selects a correct control parameter and a to-be-set value of the correct control parameter through a prompt based on the instruction input by the user and the valid feature data, and takes the correct control parameter and the to-be-set value of the correct control parameter as the comprehensive input instruction.

6. The interactive PV information processing system according to claim 3, wherein the analysis and management unit further comprises a memory storage module; and the memory storage module is configured to store PV standard data and real-time interaction data, and is connected to the context-based comprehensive processing module.

7. The interactive PV information processing system according to claim 3, wherein the analysis and management unit further comprises an output parsing module; and the output parsing module is configured to receive and parse the output instruction to generate the control parameter or chart data.

8. The interactive PV information processing system according to claim 7, wherein the control parameter is distributed to the device side by the analysis and management unit for parameter configuration, thereby enabling the issuance of the control parameter.

9. The interactive PV information processing system according to claim 3, wherein the output parsing module is provided with a plurality of chart templates; and each of the chart templates comprises coordinate axis information, data content, and chart style.

10. The interactive PV information processing system according to claim 7 or 9, wherein the user inputs a temporary supplementary instruction via the APP terminal; and the analysis and management unit receives, parses, and processes the temporary supplementary instruction to complete or modify the chart data.

11. The interactive PV information processing system according to claim 1, further comprising a routing unit, wherein the routing unit is connected to the analysis and management unit, and is configured to distribute the output instruction to the APP terminal or the device side to perform a corresponding execution action.

12. The interactive PV information processing system according to claim 1, further comprising an invocation and execution unit, wherein the invocation and execution unit is connected to the routing unit, and is configured to determine to invoke the APP terminal or the device side to perform the corresponding execution action according to the output instruction distributed by the routing unit.

13. The interactive PV information processing system according to claim 1, wherein the instruction input by the user is in the form of voice or text.

14. An interactive PV information processing method, comprising following processing steps:
inputting, by a user, an instruction via an APP terminal, and sending the input instruction to an analysis and management unit; and
analyzing and processing, by an analysis and management unit, the instruction to generate a natural language-based output instruction, and performing format parsing on the output instruction to generate a feedback instruction or an executable control instruction;
wherein the feedback instruction is distributed to the APP terminal by the analysis and management unit for information display, thereby enabling the reading and display of a working parameter; and the control instruction is distributed to a device side by the analysis and management unit for parameter configuration, thereby enabling the issuance of a control parameter.

15. The interactive PV information processing method according to claim 14, comprising: when the instruction corresponds to a parameter configuration condition: performing, by an input preprocessing module of the analysis and management unit, feature extraction on a keyword of the instruction to generate second valid feature data; retrieving corresponding required data from PV standard data according to the second valid feature data; comparing, by a context-based comprehensive processing module, the retrieved corresponding required data with the instruction; successfully generating a second input instruction if the second valid feature data is within a PV standard range; otherwise, interacting with the user via the APP terminal to correct the instruction, until the second input instruction is successfully generated; aggregating the second input instruction and the second valid feature data to generate a second comprehensive input instruction, and sending the second comprehensive input instruction to an LLM; and reading and processing, by the LLM, the second comprehensive input instruction to generate the natural language-based output instruction.

16. The interactive PV information processing method according to claim 15, comprising: converting, by the input preprocessing module, the instruction into a feature vector, searching for a predefined control parameter set from a vector database, filtering the found control parameter set, and selecting a control parameter set with high relevance as the second valid feature data according to a threshold weight.

17. The interactive PV information processing method according to claim 16, comprising: selecting, by the context-based comprehensive processing module, a correct control parameter and a to-be-set value of the correct control parameter through a prompt based on the instruction input by the user and the second valid feature data, and taking the correct control parameter and the to-be-set value of the correct control parameter as the second input instruction.

18. The interactive PV information processing method according to claim 15, comprising: receiving and parsing, by an output parsing module of the analysis and management unit, the output instruction to generate the control instruction, and sending the control instruction to the device side, such that the device side performs parameter configuration according to the control instruction.

19. The interactive PV information processing method according to any one of claims 15 to 18, comprising: interacting with the user via the APP terminal during the generation of the second input instruction, such that a supplementary instruction is input as a constraint for computational optimization of the second input instruction.

20. The interactive PV information processing method according to claim 14, comprising: when the instruction corresponds to a parameter display condition: performing, by an input preprocessing module of the analysis and management unit, feature extraction on a keyword of the instruction to generate first valid feature data; retrieving corresponding required data from a real-time information management unit according to the first valid feature data to generate a first input instruction; aggregating the first input instruction and the first valid feature data to generate a first comprehensive input instruction, and sending the first comprehensive input instruction to an LLM; and reading and processing, by the LLM, the first comprehensive input instruction to generate the natural language-based output instruction.

21. The interactive PV information processing method according to claim 20, comprising: receiving and parsing, by an output parsing module of the analysis and management unit, the output instruction to generate chart data, and sending the chart data to the APP terminal, such that the APP terminal generates a dialog box or a chart for display according to the chart data.

22. The interactive PV information processing method according to claim 21, wherein the chart is a bar chart, a column chart, a line chart, or a pie chart.

23. The interactive PV information processing method according to any one of claims 20 to 22, comprising: inputting, by the user, a follow-up instruction after the chart is generated on the APP terminal; and retrieving, by the analysis and management unit, PV standard data according to the follow-up instruction to analyze the chart, and outputting a chart analysis result.
